(19)

**Europäisches Patentamt**
**European Patent Office**
**Office européen des brevets**

(11)  **EP 4 575 622 A1**

(12)  # EUROPEAN PATENT APPLICATION

(43) Date of publication:
**25.06.2025 Bulletin 2025/26**

(21) Application number: **23218396.2**

(22) Date of filing: **20.12.2023**

(51) International Patent Classification (IPC):
**G02F 1/125** *(2006.01)*

(52) Cooperative Patent Classification (CPC):
**G02F 1/125**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicants:
- **Imec VZW**
  **3001 Leuven (BE)**
- **Katholieke Universiteit Leuven**
  **3000 Leuven (BE)**

(72) Inventors:
- **Khalil, Ahmed**
  **3000 Leuven (BE)**
- **Peyskens, Frédéric Olivier**
  **9051 Sint-Denijs-Westrem (BE)**
- **Rottenberg, Xavier**
  **3010 Kessel-Lo (BE)**
- **Van Dorpe, Pol**
  **3510 Spalbeek (BE)**

(74) Representative: **Roth, Sebastian**
**Mitscherlich PartmbB**
**Patent- und Rechtsanwälte**
**Karlstraße 7**
**80333 München (DE)**

(54)  **ACOUSTO-OPTIC BASED BROADBAND DIRECTIONAL OPTICAL DEVICE**

(57)   The present disclosure relates to non-reciprocal/directional optical devices. The disclosure proposes a directional optical device, an optical system and a corresponding method of operating the optical system. The directional optical device comprises: a waveguide structure and a array of a plurality of acoustic wave transducers, wherein a first plurality of acoustic waves generated by the array is configured to induce a momentum-shift and a frequency-shift in a first optical wave propagating in the waveguide structure such that the first optical wave transitions from a first optical mode to a second optical mode, wherein the array is configured to establish a first set of phase differences between the first pluralities of acoustic waves. The array is tunable and/or the waveguide structure is tapered to change a wavevector of the optical wave in a first section of the waveguide structure such that the first optical wave transitions to the second optical mode.

**FIG. 1**

EP 4 575 622 A1

## Description

TECHNICAL FIELD

The present disclosure relates to non-reciprocal or directional optical devices. The disclosure proposes a directional optical device, an optical system and a corresponding method of operating the optical system. The directional optical device comprises a new kind of acoustic wave transducer and/or a new kind of waveguide structure.

BACKGROUND

With recent efforts towards achieving laser integration, many systems are becoming fully integrated on-chip. However, conventional commercial isolators and circulators hurdle the otherwise potential full system integration in many applications. For many years, the non-reciprocity of commercial isolators and circulators was based on the magneto-optic effect of magnetic materials which are not compatible with CMOS technologies.

Broadband isolators and circulators can be used to improve, for example, communication systems and systems in the automotive industry. For example, in communication systems, a bidirectional transmission in a single-fiber transmission line is enabled using one circulator on each end. In wavelength division multiplexing (WDM) systems, increased bandwidth translates into more data transmission. In light detection and ranging (LiDAR) systems, broadband circulators are critical for many configurations such as dispersive optical phased array LiDARs, and swept source LiDARs. Another application for isolators and circulators in the visible to infrared range is integrated optical coherence tomography (OCT). However, conventional magnetic-free isolators and circulators can only operate at a single light wavelength.

In summary, convetentional magnetic-free based isolators and circulators have limited bandwidth, and integrated isolator or circulators, for example, for Si/SiN platforms, are currently unavailable.

SUMMARY

In view of the above, an objective of this disclosure is to provide a broadband acousto-optic based directional optical device. Another objective is to provide an integrated directional optical device.

These and other objectives are achieved by this disclosure as described in the independent claims. Advantageous implementations are further defined in the dependent claims.

The solutions of this disclosure is based on the following considerations.

For conventional directional optical devices, the dispersive nature of the optical waveguide modes leads to the phase matching condition only being satisfied with a small bandwidth around the central wavelength.

However, on-chip acousto-optic interaction may be used to meet the need for broadband isolators and circulators with commercially competitive specifications. The momentum of the temporal index modulation on-chip may be controlled to satisfy the phase matching condition for a much wider bandwidth.

A first aspect of this disclosure provides a directional optical device, comprising: a waveguide structure configured to receive a first optical wave in a first optical mode at a first end of the waveguide structure, and a tunable array of a plurality of acoustic wave transducers, wherein the array is placed at a distance to the waveguide structure and is configured to: generate a first plurality of acoustic waves, each acoustic wave having a phase that is tuned by the array to establish a first set of phase differences between the first plurality of acoustic waves, and provide the first plurality of acoustic waves to the waveguide structure, wherein the first plurality of acoustic waves is configured, due to the first set of phase differences established by the array, to induce a momentum-shift and a frequency-shift in the first optical wave propagating in the waveguide structure such that the first optical wave transitions from the first optical mode to a second optical mode as it propagates through the waveguide structure to a second end, distinct from the first end, of the waveguide structure.

The directional optical device may be a broadband directional optical device. For example, the directional optical device may be suitable for a larger frequency range of optical waves than conventional directional optical devices. For example, the directional optical device may be suitable for optical waves having a wavelength or central wavelength in the range of 200 nm to 2000 nm. For example, the directional optical device may be suitable for optical waves having a bandwidth in the range of 50 nm to 150 nm around the central wavelength.

For example, by tuning the array to establish a first set of phase differences between the first plurality of acoustic waves, the directional optical device can be enabled to be used as a broadboand directional optical device.

In this disclosure, a directional optical device may be suitable for controlling the path and the direction of optical waves in an optical system. A directional optical device may influence how optical waves may travel and interact within the system, ensuring that the optical waves propagate in specific and/or intended directions.

The directional optical device may be a non-reciprocal optical device, for example, an optical isolator or circulator.

The directional optical device may be a magnetic free directional optical device. The directional optical device may be based on acousto-optic based isolation, for example, based on the acousto-optic effect. For example, the directional optical device may be based on interband transition optical isolation.

The directional optical device may be an integrated directional optical device. For example, the directional optical device being based on acousto-optic based isolation may enable the directional optical device to be an integrated directional optical device.

The first plurality of acoustic waves may be generated in the near field region or the far field region of the waveguide structure. The array of the plurality of acoustic wave transducers may be reconfigurable.

The array of the plurality of acoustic wave transducers may comprise, for example, 5 or more transducers. For example, the array of the plurality of acoustic wave transducers may comprise 100 or more transducers, for example, 100 to 1000 tansducers. For example, the array may be a one-dimensional or a two-dimensional array.

The waveguide structure is configured to receive the first optical wave, wherein the first optical wave may be received as an optical wave that is in the first optical mode. For example, when the first optical wave is received by the waveguide structure, the waveguide structure primarily supports the first optical mode of the first optical wave.

The waveguide structure may comprsise a waveguide. For example, the waveguide may be a straight waceguide or a planar waveguide. Additionally or alternatively, the waveguide structure or the waveguide may be tapered along its extension direction. The waveguide structure or the waveguide may comprise, for example, SiN or Si.

The momentum-shift and frequency-shift induced by the first plurality of acoustic waves in the first optical wave propagating in the waveguide structure may satisfy a respective phase matching condition, such that the first optical wave transitions from the first optical mode to the second optical mode. The generated first plurality of acoustic waves may have the exact co-propagating momentum required to match the momentum difference between the first optical mode at and the second optical mode at an optical frequency of the first optical wave.

The first plurality of acoustic waves may change a refractive index of the waveguide structure by physically compressing and/or de-compressing the waveguide structure. Thus, a momentum and/or frequency shift can be provided to the waveguide structure.

The first plurality of acoustic waves may or may not be further configured, due to the first set of phase differences established by the array, to induce a momentum-shift and a frequency-shift in a second optical wave propagating in the waveguide structure such that the second optical wave transitions from a third optical mode to a fourth optical mode as it propagates through the waveguide structure to a second end, distinct from the first end, of the waveguide structure.

The array may be tuned such that it generates different sets of phase differences between a respectively generated plurality of acoustic waves. The array may be configured to tune at least one angle of incidence of the first plurality of acoustic waves on the waveguide structure.

In an implementation form of the first aspect, the waveguide structure is configured to receive a second optical wave in a third optical mode at the first end of the waveguide structure, wherein the array of the plurality of acoustic wave transducers is further configured to: generate a second plurality of acoustic waves, each acoustic wave having a phase that is tuned by the array to establish a second set of phase differences between the second plurality of acoustic waves that is different than the first set of phase differences between the first plurality of acoustic waves, and provide the second plurality of acoustic waves to the waveguide structure, wherein the second plurality of acoustic waves is configured, due to the second set of phase differences established by the array, to induce a momentum-shift and a frequency-shift in the second optical wave propagating in the waveguide structure such that the second optical wave transitions from the third optical mode to a fourth optical mode as it propagates through the waveguide structure to the second end.

The first optical wave and the second optical wave may have different frequencies. For example, an entire frequency spectrum of the first optical wave and an entire frequency spectrum of the second optical wave may not overlap. For example, the directional optical device may be a broadband directional optical device, as the first optical wave and the second optical wave have sufficiently different frequencies. For example, the first optical wave may have a central wavelength in the range of 1200 nm to 1300 nm and the second optical wave may have a central wavelength in the range of 1400 nm to 1500 nm.

The momentum-shift and frequency-shift induced by the second plurality of acoustic waves in the second optical wave propagating in the waveguide structure may satisfy a respective phase matching condition such that the second optical wave transitions from the third optical mode to the fourth optical mode.

The waveguide structure is configured to receive the second optical wave, wherein the second optical wave may be received as an optical wave that is in the third optical mode.

For example, when the second optical wave is received by the waveguide structure, the waveguides structure primarily supports the third optical mode of the second optical wave.

The array may be configured to tune at least one angle of incidence of the second plurality of acoustic waves on the waveguide structure.

In a further implementation form of the first aspect, the waveguide structure is configured to receive the first optical wave and the second optical wave simultaneously, wherein the array of the plurality of acoustic wave transducers is further configured to: generate a third plurality of acoustic waves, each acoustic wave having a phase that is tuned by the array to establish a third set of phase differences between the third plurality of acoustic waves that is different than the first set of phase differences between the first plurality of acoustic waves and the second set of phase differences between the second plurality of acoustic waves, and provide the third plurality of acoustic waves to the waveguide structure, wherein the third plurality of acoustic waves is configured, due to the third set of phase differences established by the array, to induce a momentum-shift and a frequency-shift in respectively the first optical wave and the second optical wave propagating in the waveguide structure such that the first optical wave transitions from the first optical mode to the second optical mode as it propagates through the waveguide structure to the second end, and the second optical wave transitions from the third optical mode to the fourth optical mode as it propagates through the waveguide structure to the second end.

The momentum-shift and frequency-shift induced by the third plurality of acoustic waves in the first optical wave and the second optical wave propagating in the waveguide structure may satisfy the respective phase matching conditions such that the first optical wave and the second optical wave transition respectively from the first optical mode to the second optical mode and the third optical mode to the fourth optical mode.

The frequency and momentum shifts induced by the third plurality of acoustic waves may be combined with the frequency and momentum shifts induced by respectively the first plurality of acoustic waves and/or the second plurality of acoustic waves such that the first optical wave transitions from the first optical mode to the second optical mode, and the second optical wave transitions from the third optical mode to the fourth optical mode.

The second plurality of acoustic waves and/or the third plurality of acoustic waves may change a refractive index of the waveguide structure by physically compressing and/or decompressing the waveguide structure.

The frequency of the first plurality of acoustic waves may be in the range of 0.1 GHz to 100 GHz. The frequency of the second plurality of acoustic waves may be in the range of 0.1 GHz to 100 GHz. The frequency of the third plurality of acoustic waves may be in the range of 0.1 GHz to 100 GHz.

The array may be configured to tune at least one angle of incidence of the third plurality of acoustic waves on the waveguide structure.

In a further implementation form of the first aspect, at least one of (i) the directional optical device is configured to obtain a first plurality of control signals, the array is configured to generate the first plurality of acoustic waves by using the first plurality of control signals, and the first set of phase differences between the first plurality of acoustic waves is tunable by means of the first plurality of control signals; (ii) the directional optical device is configured to obtain a second plurality of control signals, the array is configured to generate the second plurality of acoustic waves, if present, by using the second plurality of control signals, and the second set of phase differences between the second plurality of acoustic waves is tunable by means of the second plurality of control signals; and (iii) the directional optical device is configured to obtain a third plurality of control signals, the array is configured to generate the third plurality of acoustic waves, if present, by using the third plurality of control signals, and wherein the third set of phase differences between the third plurality of acoustic waves is tunable by means of the third plurality of control signals.

For example, the first plurality of control signals may be tunable by tuning at least one phase difference between the first plurality of control signals.

The array may be tuned by obtaining or receiving respectively different/tuned pluralities of control signals. For example, the array may be tuned in a first way by obtaining the first plurality of control signals, and tuned in a second way by obtaining the second plurality of control signals that is different form the first plurality of control signals.

In a further implementation form of the first aspect, at least one of (i) the first plurality of control signals are tuned based on a wavelength property of the first optical wave, (ii) the second plurality of control signals are tuned based on a wavelength property of the second optical wave, if present, and (iii) the third plurality of control signals are tuned based on a wavelength property of the first optical wave and a wavelength property of the second optical wave, if present.

The wavelength property of the first optical wave may comprise or be based on a central wavelength of the first optical wave or a spectrum of the first optical wave.

The wavelength property of the second optical wave may comprise or be based on a central wavelength of the second optical wave or a spectrum of the second optical wave.

In a further implementation form of the first aspect, at least one of the first plurality of control signals, the second plurality of control signals, if present, and the third plurality of control signals, if present, are radio frequency signals.

In a further implementation form of the first aspect, the array is arranged at a distance smaller than 10 μm to the waveguide structure and/or wherein the first plurality of acoustic waves are generated in the near-field region of the waveguide structure.

In a further implementation form of the first aspect, the second plurality of acoustic waves are generated in the near-field region of the waveguide structure.

In a further implementation form of the first aspect, the third plurality of acoustic waves are generated in the near-field region of the waveguide structure.

In the near-field approach, the array may generate the first plurality of acoustic waves such that they have different angles of incidence on the waveguide structure with different intensities. In the near-field approach, the array may generate the second plurality of acoustic waves such that they have different angles of incidence on the waveguide structure with different intensities. In the near-field approach, the array may generate the third plurality of acoustic waves such that they have different angles of incidence on the waveguide structure with different intensities.

In a further implementation form of the first aspect, the array is arranged at a distance larger than 10 μm to the waveguide structure and/or wherein the first plurality of acoustic waves is generated in the far-field region of the waveguide structure.

In a further implementation form of the first aspect, the second plurality of acoustic waves is generated in the far-field region of the waveguide structure.

In a further implementation form of the first aspect, the third plurality of acoustic waves is generated in the far-field region of the waveguide structure.

In a further implementation form of the first aspect, the acoustic waves of the first plurality of acoustic waves are configured to interfere to form one or more first combined acoustic waves, wherein the array is configured to tune one or more angles of incidence of the one or more first combined acoustic waves on the waveguide structure.

In a further implementation form of the first aspect, the acoustic waves of the second plurality of acoustic waves are configured to interfere to form one or more second combined acoustic waves, wherein the array is configured to tune one or more angles of incidence of the one or more second combined acoustic waves on the waveguide structure.

The one or more angles of incidence of the one or more first combined acoustic waves on the waveguide structure may be different from the one or more angles of incidence of the one or more second combined acoustic waves on the waveguide structure.

In a further implementation form of the first aspect, the acoustic waves of the third plurality of acoustic waves are configured to interfere to form one or more third combined acoustic waves, wherein the array is configured to tune one or more angles of incidence of the one or more third combined acoustic waves on the waveguide structure.

The one or more angles of incidence of the one or more third combined acoustic waves on the waveguide structure may be different from the one or more angles of incidence of the one or more first combined acoustic waves on the waveguide structure and/or the one or more angles of incidence of the one or more second combined acoustic waves on the waveguide structure.

The one or more first combined acoustic waves may be one first combined acoustic wave that has a distinct angle of incidence on the waveguide structure and that carries the majority of the acoustic power generated by the array except of possibly the one second combined acoustic wave and/or the one third combined acoustic wave.

The one or more second combined acoustic waves may be one second combined acoustic wave that has a distinct angle of incidence on the waveguide structure and that carries the majority of the acoustic power generated by the array except of possibly the one first combined acoustic wave and/or the one third combined acoustic wave.

The one or more third combined acoustic waves may be one third combined acoustic wave that has a distinct angle of incidence on the waveguide structure and that carries the majority of the acoustic power generated by the array except of possibly the one first combined acoustic wave and/or the one second combined acoustic wave.

In this disclosure, the angles of incidence of acoustic waves may, for example, be defined as follows. The waveguide structure may comprise a waveguide. The angle of incidence may be defined according to conventional defintions of an incidant ray on a cylinder, wherein a waveguide core of the waveguide may have a cylindrical shape. For example, at a position where a respective acoustic wave is incident on a waveguide core of the waveguide structure, the waveguide core has a normal vector that is parallel to the cross section of the waveguide core. A respective angle of incidence may be an angle relative to said normal vector. The normal vector and the angle of incidence may be in or define a plane.

In a further implementation form of the first aspect, at least one of the first plurality of acoustic waves, the second plurality of acoustic waves, if present, and the third plurality of acoustic waves, if present, are bulk acoustic waves.

In a further implementation form of the first aspect, at least one of: (i) the first optical wave is attenuated and/or diverted towards a port of the directional optical device based on being in the second optical mode, and the second optical wave, if present, is attenuated and/or diverted towards the port of the directional optical device based on being in the fourth optical mode, (ii) a fourth optical wave being in a fifth optical mode propagates in an opposite direction along the extension of the waveguide structure than the first optical wave, and wherein the first plurality of acoustic waves is configured, due to the first set of phase differences established by the array, to not induce a momentum-shift and a frequency-shift in the fourth optical wave propagating in the waveguide structure that would be required for the fourth optical wave to transition from the fifth optical mode to another optical mode as it propagates through the waveguide structure, and wherein the fourth optical wave is guided towards another port of the directional optical device based on being in the fifth optical mode.

The fourth optical wave and the first optical wave may or may not have the same frequency spectrum, for example, the same central wavelength. For example, the first optical wave may be a reflection of the fourth optical wave. For example, the second optical wave may be a reflection of the fourth optical wave or a fifth optical wave.

By attenuating or not collecting optical waves based on their propagation direction, the directional optical device may obtain its capability of being a directional or non-reciprocal device. The port of the directional optical device may be for attenuating optical waves. The another port of the directional optical may be for collecting or not attenuating the optical waves. For example, the collected optical waves may be used for commucation.

Alternativeley, the first optical wave and second optical wave may be collected or not attenuated wherein the fourth optical wave may be attenuated.

In a further implementation form of the first aspect, the directional optical device further comprises an acoustic reflector arranged at a distance to the waveguide structure on an opposite side of the waveguide structure than the array, wherein the acoustic reflector is configured to at least one of (i) reflect at least some components of the first plurality of acoustic waves towards the waveguide structure to contribute to the transition of the first optical wave from the first optical mode to the second optical mode as it propagates through the waveguide structure, (ii) reflect at least some components of the second plurality of acoustic waves, if present, towards the waveguide structure to contribute to the transition of the second optical wave from the third optical mode to the fourth optical mode as it propagates through the waveguide structure, and (iii) reflect at least some components of the third plurality of acoustic waves, if present, towards the waveguide structure to contribute to the transition of the first optical wave from the first optical mode to the second optical mode and the transition of the second optical wave from the third optical mode to the fourth optical mode as it propagates through the waveguide structure.

Reflecting an acoustic wave back into/towards the waveguide structure may increase the magnitude of the index perturbation resulting into increasing the interaction strength. Thus, the directional optical device may be more power efficient and/or have a smaller footprint.

In a further implementation form of the first aspect, at least one of (i) the waveguide structure is a straight waveguide, (ii) the directional optical device is an optical isolator or an optical circulator, (iii) the directional optical device is at least a part of a planar integrated circuit, and the plurality of acoustic wave transducers of the array are arranged next to each other, each acoustic wave transducer being configured to generate a respective acoustic wave of the first plurality of acoustic waves having a respective tunable phase.

The directional optical device may be at least a part of a planar integrated circuit, and the plurality of acoustic wave transducers of the array are arranged next to each other, each acoustic wave transducer being configured to generate a respective acoustic wave of at least one of the first plurality of acoustic waves, the second plurality of acoustic waves, and the third plurality of acoustic waves having a respective tunable phase.

The plurality of acoustic wave transducers of the array may be arranged next to each other in the direction of the propagation of the first optical wave in the waveguide structure.

In a further implementation form of the first aspect, wherein the waveguide structure is a tapered waveguide structure.

A second aspect of this disclosure provides an optical system comprising: the directional optical device according to the first aspect or its respective implementation forms, and a controller, wherein the controller is configured to: obtain one or more instructions, obtain a wavelength property of the first optical wave, and convert the one or more instructions into the first plurality of control signals by using the wavelength property of the first optical wave.

Thus, the optical system may be adaptable to particular optical waves that are received by the directional optical device. For example, the optical system may be adapted based on a wavelength property of the first optical wave and subsequently be adapted based on a wavelength proerpty of the second optical wave. Thus, the optical system can be configured for different wavelengths of different optical waves and be used as a broadband optical system.

The controller may further be configured to provide the one or more instructions to the directional optical device, for example, the tunable array of the directional optical device.

In an implementation form of the second aspect, the one or more instructions are one or more first instructions, wherein the controller is further configured to: obtain one or more second instructions, obtain a wavelength property of the second optical wave, and convert the one or more second instructions into the second plurality of control signals by using the wavelength property of the second optical wave.

In an implementation form of the second aspect, the controller is further configured to: obtain one or more third instructions, and convert the one or more third instructions into the third plurality of control signals by using the wavelength property of the first optical wave and the the wavelength property of the second optical wave.

The optical system of the second aspect may have implementation forms that correspond to the implementation forms of the directional optical device of the first aspect. The optical system of the second aspect and its implementation forms achieve the advantages and effects described above for the directional optical device of the first aspect and its respective implementation forms.

A third aspect of this disclosure provides a directional optical device, comprising: a tapered waveguide structure configured to receive a first optical wave in a first optical mode at a first end of the waveguide structure, and an array of a plurality of acoustic wave transducers, wherein the array is placed at a distance to the waveguide structure and is configured to: generate a first plurality of acoustic waves, each acoustic wave having a phase that results in a first set of phase differences between the first plurality of acoustic waves, and provide the first plurality of acoustic waves to the waveguide structure, wherein the first plurality of acoustic waves creates a parabolic intensity profile on the waveguide structure, wherein the waveguide structure is configured, due to the tapering of the waveguide structure, to change a wavevector of the first optical wave as it propagates through a tapered first section of the waveguide structure, wherein the first plurality of acoustic waves is configured, due to the first set of phase differences between the first plurality of acoustic waves and due to the parabolic intensity profile, to induce a momentum-shift and a frequency-shift in the first optical wave propagating through the waveguide structure, such that the first optical wave transitions due to the changed wavevector of the first optical wave from the first optical mode to a second optical mode as it propagates through the tapered first section towards a second end, distinct from the first end, of the waveguide structure.

In an implementation form of the third aspect, the waveguide structure is configured to receive a second optical wave in a third optical mode at the first end of the waveguide structure, wherein the waveguide structure is configured, due to the tapering of the waveguide structure, to change a wavevector of the second optical wave as it propagates through a tapered second section of the waveguide structure, wherein the first plurality of acoustic waves is configured, due to the first set of phase differences between the first plurality of acoustic waves and due to the parabolic intensity profile, to induce a momentum-shift and a frequency-shift in the second optical wave propagating through the waveguide structure, such that the second optical wave transitions due to the changed wavevector of the second optical wave from the third optical mode to a fourth optical mode as it propagates through the tapered second section towards the second end of the waveguide structure.

The directional optical device of the third aspect may have implementation forms that correspond to the implementation forms of the directional optical device of the first aspect. The directional optical device of the third aspect and its implementation forms achieve the advantages and effects described above for the directional optical device of the first aspect and its respective implementation forms.

A fourth aspect of this disclosure provides a metod of operating an optical system, the optical system comprising the directional optical device according to the first aspect or its respective implementation forms, and a controller, wherein the method comprises: obtaining, with the controller, one or more instructions, obtaining, with the controller, a wavelength property of the first optical wave, and converting, with the controller, the one or more instructions into the first plurality of control signals by using the wavelength property of the first optical wave.

The method of the fourth aspect may have implementation forms that correspond to the implementation forms of the optical system of the second aspect. The method of the fourth aspect and its implementation forms achieve the advantages and effects described above for the optical system of the second aspect and its respective implementation forms.

Further, in this disclosure, the term "set" refers to a set that may consist of one or more elements. For example, the first set of phase differences may be a set of one or more phase differences. For example, the second set of phase differences may be a set of one or more phase differences. For example, the third set of phase differences may be a set of one or more phase differences.

Further, in this disclosure, a first element and a second element are considered to be different elements, if not explicitly mentioned otherwise. For example, the first optical wave and the second optical wave are considred to be different optical waves. For example, the first plurality of acoustic waves and the second plurality of acoustic waves are considered to be different pluralities of acoustic waves. For example, the first set of phase differences and the second set of phase differences are considred to be different sets of phase differences. For example, the first optical mode and the second optical mode are considered to be different optical modes. For example, the third optical mode and the fourth optical mode are considered to be different optical modes. The first optical mode and the third optical mode may or may not be different optical modes. The second optical mode and the fourth optical mode may or may not be different optical modes.

BRIEF DESCRIPTION OF DRAWINGS

The above described aspects and implementation forms will be explained in the following description of specific embodiments in relation to the enclosed drawings, in which

FIG. 1 shows a directional optical device according to this disclosure.

FIG. 2 shows an optical system according to this disclosure.

FIG. 3 shows a directional optical device according to this disclosure.

FIG. 4a shows a forward propagating wave in an optical isolator.

FIG. 4b shows a backward propagating wave in an optical isolator.

FIG. 4c    shows a band diagram of the interband photonic transition showing the phase matching in the forward propagation and phase mismatch in the backward propagation.

FIG. 5a    shows an exemplary array of a plurality of acoustic wave transducers being arranged in the near of the waveguide structure according to this disclosure.

FIG. 5b    shows a dispersion relation based on the near field approach according to this disclosure.

FIG. 5c    shows an exemplary array of a plurality of acoustic wave transducers being arranged in the far field of the waveguide structure according to this disclosure.

FIG. 5d    shows a dispersion relation based on the far field approach according to this disclosure.

FIG. 6     shows a cross section of an exemplary directional optical device according to this disclosure.

FIG. 7     shows a constant-cross sectional waveguide structure according to this disclosure.

FIG. 8     shows a tapered waveguide structure according to this disclosure.

FIG. 9     shows a method according to this disclosure.

DETAILED DESCRIPTION OF EMBODIMENTS

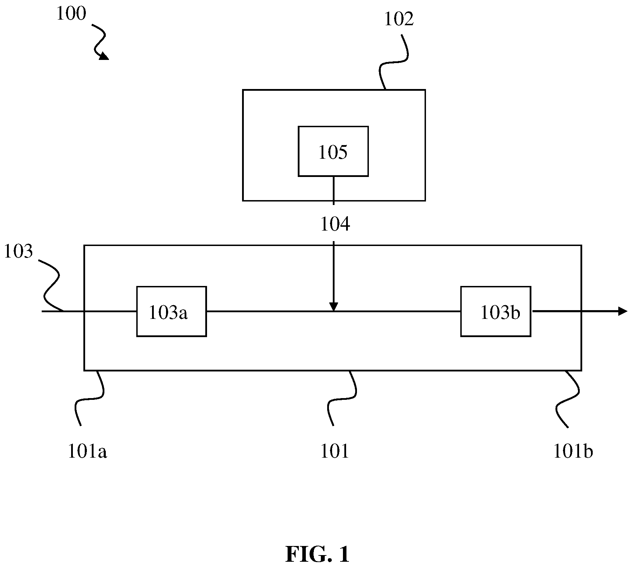

FIG. 1 shows a directional optical device 100 according to this disclosure. The directional optical device 100 comprises a waveguide structure 101 and a tunable array 102 of a plurality of acoustic wave transducers, wherein the array 102 is placed at a distance to the waveguide structure 101. For example, the array of the plurality of acoustic wave transducers may comprise 100 or more transducers. For example, the array may be a one-dimensional or a two-dimensional array. The plurality of acoustic wave transducers may be arranged regularly, for example, having the same distances between adjacent transducers, or irregularly.

The waveguide structure 101 is configured to receive a first optical wave 103 in a first optical mode 103a at a first end 101a of the waveguide structure 101. The waveguide structure 101 may comprsise a waveguide. For example, the waveguide may be a straight waceguide or a planar waveguide. Additionally or alternatively, the waveguide structure 101 or the waveguide may be tapered along its extension direction. The waveguide structure 101 or the waveguide may comprise, for example, SiN or Si.

The array 102 is configured to generate a first plurality of acoustic waves 104, each acoustic wave having a phase that is tuned by the array 102 to establish a first set of phase differences 105 between the first plurality of acoustic waves 104. Further, the array 102 is configured to provide the first plurality of acoustic waves 104 to the waveguide structure 101. The first pluraltiy of acoustic waves 104 thus impinges onto the waveguide structure 101. The plurality of acoustic wave transducers may face towards the waveguide structure 101 such that any acoustic waves generated by said transducers can be provided to the waveguide structure 101.

The first plurality of acoustic waves 104 is configured, due to the first set of phase differences 105 established by the array 102, to induce a momentum-shift and a frequency-shift in the first optical wave 103 propagating in the waveguide structure 101, such that the first optical wave 103 transitions from the first optical mode 103a (indiacted in FIG. 1) to a second optical mode 103b (indiacted in FIG. 1) as it propagates through the waveguide structure 101 to a second end 101b of the waveguide structure 101, which is distinct from the first end 101a of the waveguide structure 101.

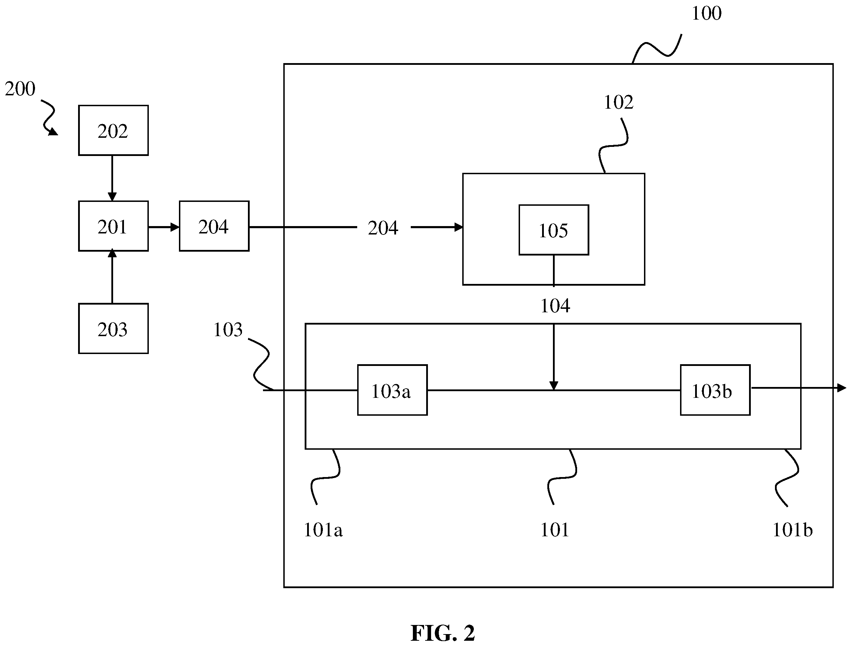

FIG. 2 shows an optical system 200 according to this disclosure. The optical system 200 comprises a directional optical device 100 as shown in FIG. 1 and a controller 201.

The controller 201 is configured to obtain one or more instructions 202, obtain a wavelength property 203 of the first optical wave 103, and convert the one or more instructions 202 into the first plurality of control signals 204 by using the wavelength property 203 of the first optical wave 103. The controller 201 may be configured to provide the control signals to the array 102, in order to control the operation of the array. The array 102 may be configured to receive the control signals, and to generate the plurality of acoustic waves 104 in accordance with the control signals 204.

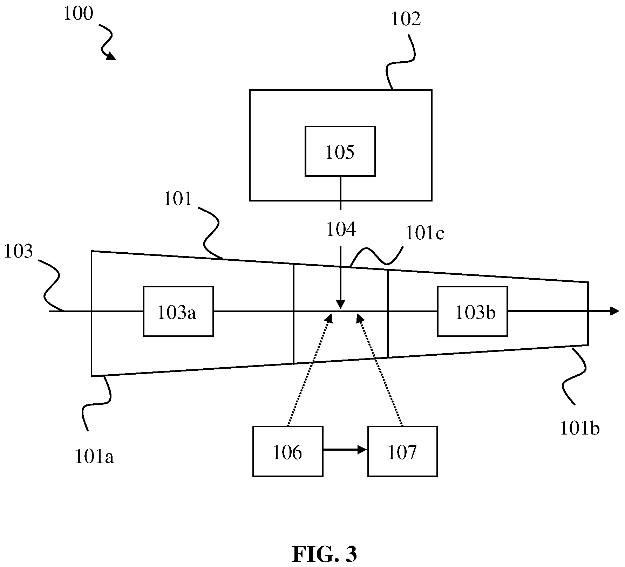

FIG. 3 shows a directional optical device 100 according to this disclosure. The directional optical comprises a tapered waveguide structure 101 and an array of a plurality of acoustic wave transducers 102, wherein the array 102 is placed at a distance to the waveguide structure 101.

The array 102 is configured to generate a first plurality of acoustic waves 104, each acoustic wave having a phase that results in a first set of phase differences 105 between the first plurality of acoustic waves 104. Further, the array 102 is configured to provide the first plurality of acoustic waves 104 to the waveguide structure 101. The acoustic waves 104 thus impinge onto the waveguide structure 101. The first plurality of acoustic waves 104 creates a parabolic intensity profile, for example, a predetermined intensity profile, on the waveguide structure 101. The intensity profile may be tunable by the array 102.

The waveguide structure 101 is configured to receive a first optical wave 103 in a first optical mode 103a at a first end 101a of the waveguide structure 101. Further, the waveguide structure 101 is configured, due to the tapering of the waveguide structure 101, to change a wavevector 106 of the first optical wave 103 as it propagates through a tapered first section 101c of the waveguide structure 101 to a changed wavevector 107. The wavevector 106 of the first optical wave 103 changing to the changed wavevector 107 is indicated by the dotted lines in FIG. 3.

The first plurality of acoustic waves 104 is configured, due to the first set of phase differences 105 between the first plurality of acoustic waves 104 and the parabolic intensity profile, to induce a momentum-shift and a frequency-shift in the first optical wave 103 propagating through the waveguide structure 101, such that the first optical wave 103 transitions due to the changed wavevector 107 of the first optical wave 103 from the first optical mode 103a (indiacted in FIG. 3) to a second optical mode 103b (indiacted in FIG. 3) as it propagates through the tapered first section 101c towards a second end 101b, distinct from the first end 101a, of the waveguide structure 101. The parabolic intensity profile may enable adiabatic mode transitions, as the coupling coefficient may be parabolic.

A broadband directional optical device 100, for example, an optical isolator/circulator, based on the acousto-optic effect can be provided. To increase the bandwidth in the directional optical devices 100 described before, for example, being an integrated acousto-optic isolator/circulator, the acoustic momentum may be controlled using the acoustic phased array 102. Thus, the bandwidth of optical isolator/circulators may be increased by orders of magnitudes compared to the conventional optical isolator/circulators. This approach may meet the requirments for integrated broadband isolators/circulators and may be implemented, for example, on Si and SiN platforms.

The basic principle to realize an acousto-optic isolator/circulator is to facilitate a directionally dependent mode transition between two optical guided modes. The acoustic wave 104 can provide an initial optical wave state with the necessary momentum and frequency to satisfy the phase matching condition required for this mode transition, wherein the phase matching condition can only be maintained at a specific direction of the acoustic wave.

A directional optical device 100 may be capable of alternating the propagating mode only in one propagation direction but not the other. Afterwards, a final optical wave state may be used at a third port of a circulator using a suitable mode splitter. Otherwise, similar to magneto-optic isolators, complete optical isolation may be attainable using a suitable mode filter.

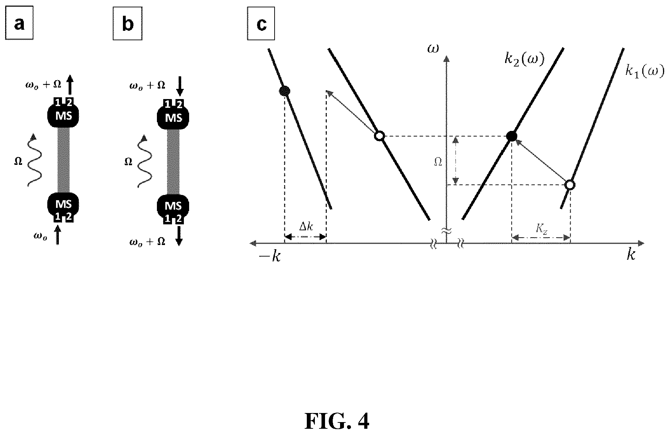

FIG. 4a shows a forward propagating wave in an optical isolator. The optical isolator comprises two mode splitters (MSs).

FIG. 4b shows a backward propagating wave in an optical isolator.

FIG. 4c shows a band diagram of the interband photonic transition showing the phase matching in the forward propagation and phase mismatch in the backward propagation.

Alternatively, the wave in FIG. 4a may be considered to be a backward propagating wave, and the wave in FIG. 4b may be considered to be a forward propagating wave.

To improve conventional integrated optical isolators or circulators in terms of bandwidth the following may be considered.

The directional optical device 100 may comprises an acoustic phased array 102 for integrated ultra-broadband optical isolation. The bandwidth of the directional optical device 100 could be increased by several orders of magnitude using a tunable acoustic wave transducer.

A tunable colinear acoustic propagation constant ($K\_z$) can be used to obtain a larger bandwidth.

For example, this can be realized by a far field acoustic wave 108 generated by the acoustic phased array 102 on top of a straight photonic waveguide 101. By changing the phase difference ($\Delta\phi$) between radio frequency (RF) signals 204 that power the array 102 of acoustic wave transducers, for example, an array 102 of Bulk Acoustic Wave (BAW) transducers, the acoustic wave 108 could be generated at different angles, and hence, different colinear propagation constant. Therefore, the phase matching condition:

$$k_1(\omega_o) - k_2(\omega_o + \Omega) = K_{Acoustic}\, sin(\theta)$$

could be satisfied for a much larger operational bandwidth, wherein $\theta$ is the angle of the acoustic wave 108 controlled by the phase difference $\Delta\phi$ imposed by the RF signal 204.

Additionally, if multiple acoustic momentums are provided to the same waveguide 101 a broader bandwidth is attainable. The near-field acoustic approach and the far-field acoustic approach offer different advantages.

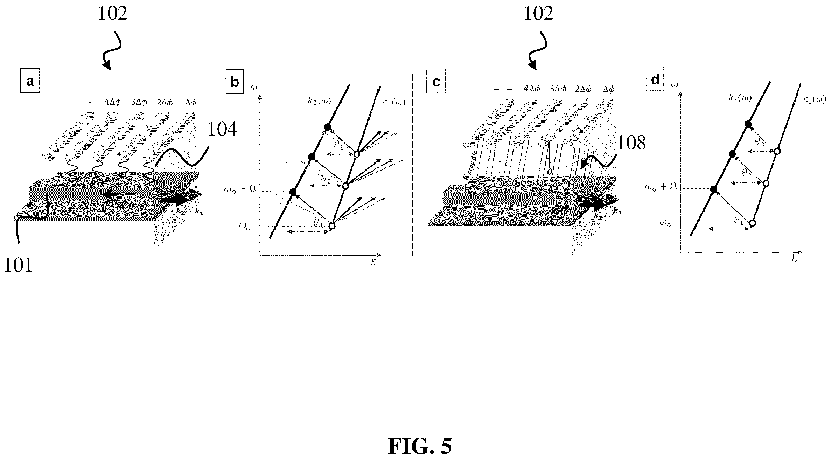

FIG. 5a shows an exemplary array 102 of a plurality of acoustic wave transducers being arranged in the near of the waveguide structure 101 according to this disclosure.

FIG. 5b shows a dispersion relation based on the near field approach according to this disclosure.

FIG. 5c shows an exemplary array 102 of a plurality of acoustic wave transducers being arranged in the far field of the waveguide structure 101 according to this disclosure.

FIG. 5d shows a dispersion relation based on the far field approach according to this disclosure.

The near field approach shown in FIG. 5a, is based on the high frequency, strong acousto-optic interaction of, for example, a ScAIN generated BAW with a SiN straight waveguide. This can realize a more compact and efficient isolator due to the strength of the acousto-optic interaction, and a higher isolation strength due to high frequency accessibility. However, there may exist other momentum components, for example, as shown in FIG.5b, due to the discrete nature of the modulation, which require careful design. Unlike in the far field approach, a dominant acoustic field propagating at the required angle may be generated.

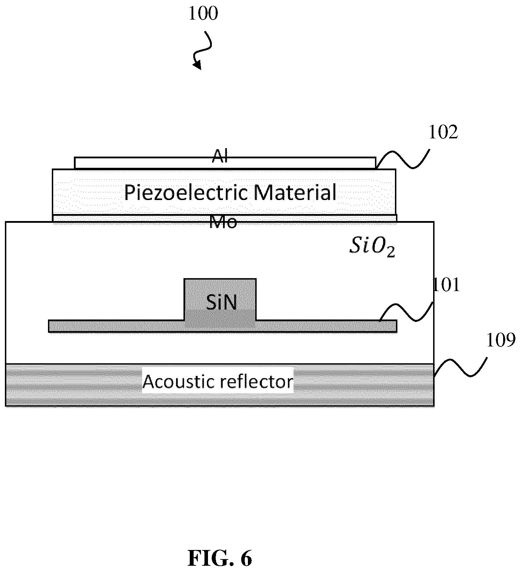

FIG. 6 shows a cross section of an exemplary directional optical device 100 according to this disclosure.

FIG. 6 shows a cross-section of a single actuator with a waveguide segment of the waveguide structure 101. The exemplary transducer of the array 102 comprises a piezoelectric material between two metallic electrodes of Al and Mo. The thickness of the piezoelectric layer may determine the operational frequency of the acoustic wave. The acoustic reflector 109 underneath the SiN waveguide may be constructed in two ways: by under-etching the silicon, for example, using $SF_6$, or by implementing a Bragg acoustic reflector 109 by deposition of alternating layers with different thicknesses.

A broadband directional optical device 100 may be implemented based on adiabatic mode transitions. The momentum across the waveguide structure 101 may vary linearly and a coupling coefficient may be parabolic.

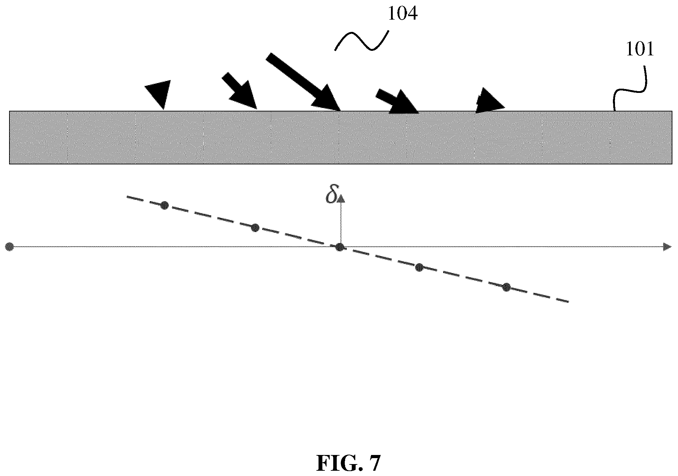

FIG. 7 shows a constant-cross sectional waveguide structure 101 according to this disclosure. FIG. 7 shows one or more acoustic waves, for example, a first plurality of acoustic waves 104 or one or more first combined acoustic waves 108, having varying angles of incident on the waveguide structure 101 to linearly vary the momentum across the waveguide structure 101. Further, FIG. 7 shows the first plurality of acoustic waves 104 having a parabolic intensity profile on the waveguide structure 101 to obtain a parabolic coupling coefficient.

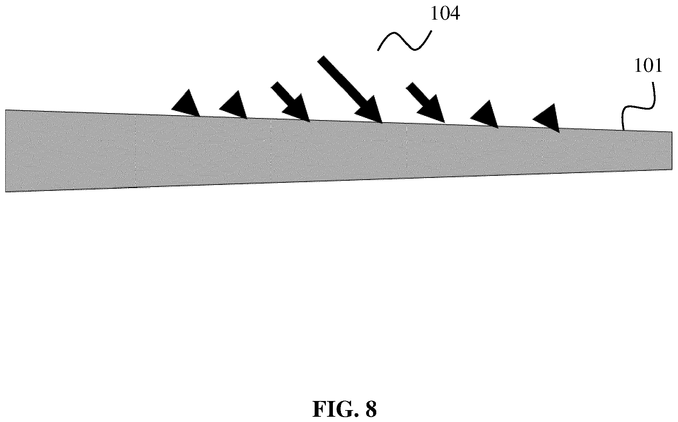

FIG. 8 shows a tapered waveguide structure 101 according to this disclosure. FIG. 8 shows one or more acoustic waves, for example, a first plurality of acoustic waves 104 or one or more first combined acoustic waves 108, having the same angle of incident on the waveguide structure 101. FIG. 8 shows a tapered waveguide structure 101 for linearly varying the momentum across the waveguide structure 101. Further, FIG. 8 shows the first plurality of acoustic waves 104 having a parabolic intensity profile on the waveguide structure 101 to obtain a parabolic coupling coefficient.

The controller 201 may be a processor 201. Generally, the processor 201 may be configured to perform, conduct or initiate the various operations of the optical system 200 described herein. The processor 201 may comprise hardware and/or may be controlled by software. The hardware may comprise analog circuitry or digital circuitry, or both analog and digital circuitry. The digital circuitry may comprise components such as application-specific integrated circuits (ASICs), field-programmable arrays (FPGAs), digital signal processors (DSPs), or multi-purpose processors. The optical system 200 may further comprise memory circuitry, which stores one or more instruction(s) that can be executed by the processor 201, in particular under control of the software. For instance, the memory circuitry may comprise a non-transitory storage medium storing executable software code which, when executed by the processor 201, causes the various operations of the optical system 200 to be performed. In one embodiment, the optical system 200 may comprises one or more processors 201 and a non-transitory memory connected to the one or more processors 201. The non-transitory memory may carry executable program code which, when executed by the one or more processors 201, causes the optical system 200 to perform, conduct or initiate the operations or methods described herein.

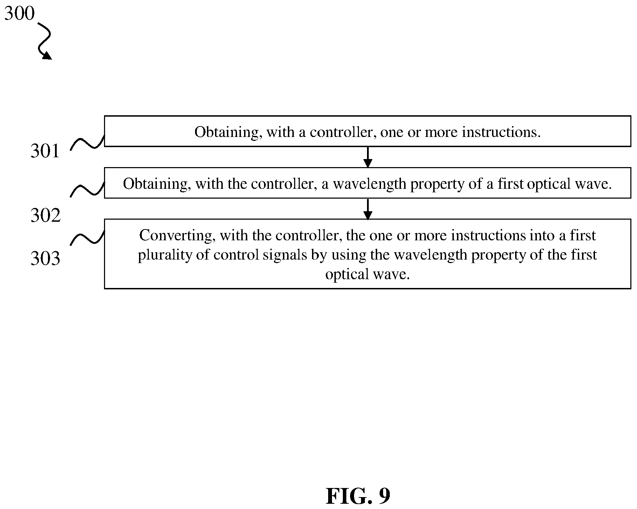

FIG. 9 shows a method 300 according to this disclosure. The method 300 is a method of operating an optical system 200, for example, the optical system shown in FIG. 2. The optical system 200 comprises a directional optical device 100, for example, the direciotnal optical device 100 shown in FIG. 1, and a controller 201.

The method 300 comprises a step 301 of obtaining, with the controller 201, one or more instructions 202. Further, the method 300 comprises a step 302 of obtaining, with the controller 201, a wavelength property 203 of the first optical wave 103. Further, the method 300 comprises a step 303 of converting, with the controller 201, the one or more instructions 202 into the first plurality of control signals 204 by using the wavelength property 203 of the first optical wave 103.

The disclosure has been described in conjunction with various embodiments as examples as well as implementations. However, other variations can be understood and effected by those persons skilled in the art and practicing the claimed matter, from the studies of the drawings, this disclosure and the independent claims. In the claims as well as in the description the word "comprising" does not exclude other elements or steps and the indefinite article "a" or "an" does not exclude a plurality. A single element or other unit may fulfill the functions of several entities or items recited in the claims. The mere fact that certain measures are recited in the mutual different dependent claims does not indicate that a combination of these measures cannot be used in an advantageous implementation.

## Claims

1. A directional optical device (100), comprising:

   a waveguide structure (101) configured to receive a first optical wave (103) in a first optical mode (103a) at a first end (101a) of the waveguide structure (101), and

a tunable array (102) of a plurality of acoustic wave transducers, wherein the array (102) is placed at a distance to the waveguide structure (101) and is configured to:

generate a first plurality of acoustic waves (104), each acoustic wave having a phase that is tuned by the array (102) to establish a first set of phase differences (105) between the first plurality of acoustic waves (104), and
provide the first plurality of acoustic waves (104) to the waveguide structure (101), wherein the first plurality of acoustic waves (104) is configured, due to the first set of phase differences (105) established by the array (102), to induce a momentum-shift and a frequency-shift in the first optical wave (103) propagating in the waveguide structure (101) such that the first optical wave (103) transitions from the first optical mode (103a) to a second optical mode (103b) as it propagates through the waveguide structure (101) to a second end (101b), distinct from the first end (101a), of the waveguide structure (101).

2. The directional optical device (100) according claim 1,

wherein the waveguide structure (101) is configured to receive a second optical wave in a third optical mode at the first end (101a) of the waveguide structure (101),
wherein the array (102) of the plurality of acoustic wave transducers is further configured to:

generate a second plurality of acoustic waves, each acoustic wave having a phase that is tuned by the array (102) to establish a second set of phase differences between the second plurality of acoustic waves that is different than the first set of phase differences (105) between the first plurality of acoustic waves (104), and
provide the second plurality of acoustic waves to the waveguide structure (101), wherein the second plurality of acoustic waves is configured, due to the second set of phase differences established by the array (102), to induce a momentum-shift and a frequency-shift in the second optical wave propagating in the waveguide structure (101) such that the second optical wave transitions from the third optical mode to a fourth optical mode as it propagates through the waveguide structure (101) to the second end (101b).

3. The directional optical device (100) according to claim 2,

wherein the waveguide structure (101) is configured to receive the first optical wave (103) and the second optical wave simultaneously,
wherein the array (102) of the plurality of acoustic wave transducers is further configured to:

generate a third plurality of acoustic waves, each acoustic wave having a phase that is tuned by the array (102) to establish a third set of phase differences between the third plurality of acoustic waves that is different than the first set of phase differences (105) between the first plurality of acoustic waves (104) and the second set of phase differences between the second plurality of acoustic waves, and
provide the third plurality of acoustic waves to the waveguide structure (101), wherein the third plurality of acoustic waves is configured, due to the third set of phase differences established by the array (102), to induce a momentum-shift and a frequency-shift in respectively the first optical wave (103) and the second optical wave propagating in the waveguide structure (101) such that the first optical wave (103) transitions from the first optical mode (103a) to the second optical mode (103b) as it propagates through the waveguide structure (101) to the second end (101b), and the second optical wave transitions from the third optical mode to the fourth optical mode as it propagates through the waveguide structure (101) to the second end (101b).

4. The directional optical device (100) according to any one of the claims 1 to 3,
wherein at least one of:

(i) the directional optical device (100) is configured to obtain a first plurality of control signals (204),

the array (102) is configured to generate the first plurality of acoustic waves (104) by using the first plurality of control signals (204), and
the first set of phase differences (105) between the first plurality of acoustic waves (104) is tunable by means of the first plurality of control signals (204);

(ii) the directional optical device (100) is configured to obtain a second plurality of control signals,

the array (102) is configured to generate the second plurality of acoustic waves, if present, by using the second plurality of control signals, and

the second set of phase differences between the second plurality of acoustic waves is tunable by means of the second plurality of control signals; and

(iii) the directional optical device (100) is configured to obtain a third plurality of control signals,

the array (102) is configured to generate the third plurality of acoustic waves, if present, by using the third plurality of control signals, and

wherein the third set of phase differences between the third plurality of acoustic waves is tunable by means of the third plurality of control signals.

5. The directional optical device (100) according to claim 4,
wherein at least one of:

(i) the first plurality of control signals (204) are tuned based on a wavelength property (203) of the first optical wave (103),
(ii) the second plurality of control signals are tuned based on a wavelength property (203) of the second optical wave, if present, and
(iii) the third plurality of control signals are tuned based on a wavelength property (203) of the first optical wave (103) and a wavelength property (203) of the second optical wave, if present.

6. The directional optical device (100) according to claim 4 or 5,
wherein at least one of the first plurality of control signals (204), the second plurality of control signals, if present, and the third plurality of control signals, if present, are radio frequency signals.

7. The directional optical device (100) according to any one of the preceding claims,
wherein the array (102) is arranged at a distance smaller than 10 μm to the waveguide structure (101) and/or wherein the first plurality of acoustic waves (104) are generated in the near-field region of the waveguide structure (101).

8. The directional optical device (100) according to any one of the preceding claims,
wherein the array (102) is arranged at a distance larger than 10 μm to the waveguide structure (101) and/or wherein the first plurality of acoustic waves (104) is generated in the far-field region of the waveguide structure (101).

9. The directional optical device (100) according to claim 7 or 8,

wherein the acoustic waves of the first plurality of acoustic waves (104) are configured to interfere to form one or more first combined acoustic waves (108),
wherein the array (102) is configured to tune one or more angles of incidence of the one or more first combined acoustic waves (108) on the waveguide structure (101).

10. The directional optical device (100) according to any one of the preceding claims,
wherein at least one of the first plurality of acoustic waves (104), the second plurality of acoustic waves, if present, and the third plurality of acoustic waves, if present, are bulk acoustic waves.

11. The directional optical device (100) according to any one of the preceding claims,

wherein at least one of:

(i) the first optical wave (103) is attenuated and/or diverted towards a port of the directional optical device (100) based on being in the second optical mode (103b), and the second optical wave, if present, is attenuated and/or diverted towards the port of the directional optical device (100) based on being in the fourth optical mode,
(ii) a fourth optical wave being in a fifth optical mode propagates in an opposite direction along the extension of the waveguide structure (101) than the first optical wave (103), and

wherein the first plurality of acoustic waves (104) is configured, due to the first set of phase differences (105) established by the array (102), to not induce a momentum-shift and a frequency-shift in the fourth optical wave propagating in the waveguide structure (101) that would be required for the fourth optical wave to transition from the fifth optical mode to another optical mode as it propagates through the waveguide structure (101), and
wherein the fourth optical wave is guided towards another port of the directional optical device (100) based on being in the fifth optical mode.

12. The directional optical device (100) according to any one of the preceding claims,

wherein the directional optical device (100) further comprises an acoustic reflector (109) arranged at a distance to the waveguide structure (101) on an opposite side of the waveguide structure (101) than the array (102), wherein the acoustic reflector (109) is configured to at least one of:

(i) reflect at least some components of the first plurality of acoustic waves (104) towards the waveguide structure (101) to contribute to the transition of the first optical wave (103) from the first optical mode (103a) to the second optical mode (103b) as it propagates through the waveguide structure (101),

(ii) reflect at least some components of the second plurality of acoustic waves, if present, towards the waveguide structure (101) to contribute to the transition of the second optical wave from the third optical mode to the fourth optical mode as it propagates through the waveguide structure (101), and

(iii) reflect at least some components of the third plurality of acoustic waves, if present, towards the waveguide structure (101) to contribute to the transition of the first optical wave (103) from the first optical mode (103a) to the second optical mode (103b) and the transition of the second optical wave from the third optical mode to the fourth optical mode as it propagates through the waveguide structure (101).

13. The directional optical device (100) according to any one of the preceding claims, wherein at least one of:

(i) the waveguide structure (101) is a straight waveguide,

(ii) the directional optical device (100) is an optical isolator or an optical circulator,

(iii) the directional optical device (100) is at least a part of a planar integrated circuit, and the plurality of acoustic wave transducers of the array (102) are arranged next to each other, each acoustic wave transducer being configured to generate a respective acoustic wave of the first plurality of acoustic waves (104) having a respective tunable phase.

14. The directional optical device (100) according to any one of the preceding claims, wherein the waveguide structure (101) is a tapered waveguide structure (101).

15. An optical system (200) comprising:

the directional optical device (100) according to any one of the claims 4 to 14, and
a controller (201),
wherein the controller (201) is configured to:

obtain one or more instructions (202),
obtain a wavelength property (203) of the first optical wave (103), and
convert the one or more instructions (202) into the first plurality of control signals (204) by using the wavelength property (203) of the first optical wave (103).

16. A directional optical device (100), comprising:

a tapered waveguide structure (101) configured to receive a first optical wave (103) in a first optical mode (103a) at a first end (101a) of the waveguide structure (101), and
an array of a plurality of acoustic wave transducers (102), wherein the array (102) is placed at a distance to the waveguide structure (101) and is configured to:

generate a first plurality of acoustic waves (104), each acoustic wave having a phase that results in a first set of phase differences (105) between the first plurality of acoustic waves (104), and
provide the first plurality of acoustic waves (104) to the waveguide structure (101),
wherein the first plurality of acoustic waves (104) creates a parabolic intensity profile on the waveguide structure (101),
wherein the waveguide structure (101) is configured, due to the tapering of the waveguide structure (101), to change a wavevector (106) of the first optical wave (103) as it propagates through a tapered first section (101c) of the waveguide structure (101),
wherein the first plurality of acoustic waves (104) is configured, due to the first set of phase differences (105) between the first plurality of acoustic waves (104) and the parabolic intensity profile, to induce a momentum-shift and a frequency-shift in the first optical wave (103) propagating through the waveguide structure (101), such that the first optical wave (103) transitions due to the changed wavevector (107) of the first optical wave (103) from the first optical mode (103a) to a second optical mode (103b) as it propagates through the tapered first section (101c) towards a second end (101b), distinct from the first end (101a), of the waveguide structure (101).

100

102

105

104

103

103a

103b

101a

101

101b

**FIG. 1**

**FIG. 2**

**FIG. 3**

EP 4 575 622 A1

**FIG. 4**

EP 4 575 622 A1

FIG. 5

100

102

Al

Piezoelectric Material

Mo

$SiO_2$

101

SiN

Acoustic reflector

109

**FIG. 6**

**FIG. 7**

FIG. 8

300

301     Obtaining, with a controller, one or more instructions.

302     Obtaining, with the controller, a wavelength property of a first optical wave.

303     Converting, with the controller, the one or more instructions into a first plurality of control signals by using the wavelength property of the first optical wave.

**FIG. 9**

**EUROPEAN SEARCH REPORT**

Application Number

EP 23 21 8396

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ERIC A KITTLAUS ET AL: "Electrically-driven Acousto-optics and Broadband Non-reciprocity in Silicon Photonics", ARXIV.ORG, CORNELL UNIVERSITY LIBRARY, 201 OLIN LIBRARY CORNELL UNIVERSITY ITHACA, NY 14853, 2 April 2020 (2020-04-02), XP081636605, | 1,2, 4-13,15 | INV. G02F1/125 |
| A | * figures 1,3 * | 3 | |
| X | WO 2022/265722 A1 (MASSACHUSETTS INST TECHNOLOGY [US]; WEST GAVIN [US]; RAM RAJEEV J [US]) 22 December 2022 (2022-12-22) | 1,2, 4-13,15 | |
| A | * figures 1A-1C * | 3 | |
| X | CN 116 643 417 A (UNIV HUAZHONG SCIENCE TECH) 25 August 2023 (2023-08-25) * figures 1,2,5,7 * | 1,13 | |
| X | US 2022/334420 A1 (LEATHAM JAMES [US]) 20 October 2022 (2022-10-20) | 1,2,4-16 | TECHNICAL FIELDS SEARCHED (IPC) |
| A | * figures 1A, 1B, 2A * | 3 | G02F |

The present search report has been drawn up for all claims

| Place of search | Date of completion of the search | Examiner |
|---|---|---|
| The Hague | 7 May 2024 | Gill, Richard |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 4 575 622 A1**

## ANNEX TO THE EUROPEAN SEARCH REPORT
## ON EUROPEAN PATENT APPLICATION NO.

**EP 23 21 8396**

This annex lists the patent family members relating to the patent documents cited in the above-mentioned European search report.
The members are as contained in the European Patent Office EDP file on
The European Patent Office is in no way liable for these particulars which are merely given for the purpose of information.

**07-05-2024**

| Patent document cited in search report | Publication date | Patent family member(s) | Publication date |
|---|---|---|---|
| WO 2022265722 A1 | 22-12-2022 | NONE | |
| CN 116643417 A | 25-08-2023 | NONE | |
| US 2022334420 A1 | 20-10-2022 | NONE | |

EPO FORM P0459

For more details about this annex : see Official Journal of the European Patent Office, No. 12/82